# EUROPÄISCHE PATENTSCHRIFT

(11) **EP 1 900 566 B1**
(45) Veröffentlichungstag und Bekanntmachung des Hinweises auf die Patenterteilung: **24.11.2010**
(21) Anmeldenummer: 07116629.2
(22) Anmeldetag: 18.09.2007
(51) Int. Cl.: B60N 2/14, B60N 2/06, B60N 2/24

(54) **Drehbarer Fahrzeugsitz**
Rotatable vehicle seat
Siège de véhicule tournant

(30) Priorität: 18.09.2006 DE 102006044313; 17.09.2007 DE 102007044319
(43) Veröffentlichungstag der Anmeldung: 19.03.2008
(73) Patentinhaber: GRAMMER AG, 92224 Amberg (DE)
(72) Erfinder: Kohl, Josef, 92242 Hirschau (DE); Ott, Richard, 92245 Kümmersbruck (DE)
(74) Vertreter: Hannke, Christian

(56) Entgegenhaltungen:
- WO-A-90/00360
- WO-A-2006/041570
- US-A- 5 161 765
- US-B1- 6 692 051

## Beschreibung

Die Erfindung betrifft einen Fahrzeugsitz mit einem Sitzteil und einem mit dem Sitzteil verbundenen Grundgestell, wobei das Grundgestell mindestens ein erstes und ein zweites Schienenelement zum Verschieben des Sitzteils aufweist, gemäß dem Oberbegriff des Patentanspruches 1.

Bekannt sind Fahrzeugsitze für Nutzfahrzeuge, die sich mittels einem am Sitzgestell unterseitig angebrachten Schienensystems nach vorne und hinten in Fahrzeuglängsrichtung verschieben lassen. Ebenso sind Fahrzeugsitze für Reisebusse bekannt, die bei Stillstand des Reisebusses um eine sich vertikal erstreckende Achse verschwenkt werden können, um das Aussteigen des hinter einem Lenkrad sitzenden Fahrers zu erleichtern.

In modernen Nutzfahrzeugkabinen hingegen wird der Zugang zu verschiedenen Funktionsraumbereichen innerhalb der Nutzfahrzeugkabine von dem Fahrer oder dem Beifahrer gefordert, wobei die Funktionsraumbereiche oder einzelne Funktionselemente in der Nutzfahrzeugkabine verteilt um die Sitze herum angeordnet sind. Hierfür muss der Fahrzeugsitz, der trotz alledem aus Sicherheitsgründen mit der Nutzfahrzeugkabine bodenseitig dauerhaft verbunden sein muss, an verschiedene Orte auf dem Bodenbereich der Kabine positionierbar sein.

Beispielsweise wird in Nutzfahrzeugkabinen moderner Lastkraftwagen es als erforderlich angesehen, dass Computer, wie beispielsweise Laptops, im zum Fahrzeugsitz hin seitlichen oder rückwärtigen Bereich zum Erhalt von Informationen, die der Fahrzeugführer benötigt, bedient werden müssen. Hierfür ist es bisher notwendig, derartige Computergeräte zu bedienen, während der Bediener auf dem Fahrzeugsitz in Fahrtrichtung ausgerichtet positioniert ist. Dies hat zur Folge, dass der Bedienungskomfort derartiger Geräte aus der Position des in der Nutzfahrzeugkabine sitzenden Bedieners sehr gering ist.

Es wird bisher augrund des begrenzten Innenraumangebots innerhalb einer herkömmlichen Nutzfahrzeugkabine eines LKWs als nicht praktizierbar angesehen, dass ein darin angeordneter Fahrer- oder Beifahrersitz um eine vertikale Achse ohne weiteres gedreht werden kann, da dies zur Folge hätte, dass sowohl der Rückenlehnenbereich des zu drehenden Fahrzeugsitzes als auch die Beine der den Sitz benutzenden Person eine derartige Drehbewegung aufgrund der umliegenden Anordnungselemente, wie das Armaturenbrett, die Gangschaltung, die Tür und die rückwärtige Wand bzw. Zwischenwand behindern würden.

Die Druckschrift DE 26 59 3330 A1, die als nächstliegender Stand der Technik angesehen wird, offenbart einen Beifahrersitz für PKW, der alle Merkmale des Oberbegriffs des Anspruchs 1 beinhaltet.

Demzufolge ist es Aufgabe der vorliegenden Erfindung, einen Fahrzeugsitz zur Verfügung zu stellen, der eine Positionierung der den Fahrzeugsitz benutzenden Person an verschiedenen Orten des Nutzfahrzeugkabinenbodenbereiches zulässt, eine Drehung des Fahrzeugsitzes selbst bei begrenzt zur Verfügung stehendem Raumangebot innerhalb der Nutzfahrzeugkabine gestattet und das Bedienen weiterer Geräte und dergleichen, welche nicht innerhalb des Armaturenbereiches liegen, mit hohem Komfort ermöglicht. Dies soll erreicht werden, ohne dass eine feste Verbindung des Fahrzeugsitzes mit dem Kabinenboden hierbei aufgegeben wird.

Diese Aufgabe wird durch die Merkmale des Patentanspruches 1 erfindungsgemäß gelöst.

Ein wesentlicher Punkt der Erfindung liegt darin, dass bei einem Fahrzeugsitz mit einem Sitzteil und einem mit dem Sitzteil verbundenen Grundgestell, wobei das Grundgestell mindestens ein erstes Schienenelement zum Verschieben des Sitzteils aufweist, das erste Schienenelement in einer ersten Ebene und mindestens ein zweites Schienenelement zum Verschieben des Sitzteils in einer zweiten Ebene mittels einer Dreheinrichtung derart miteinander verbunden sind, dass ihre gegenseitige Ausrichtung veränderbar ist. , wobei das erste Schienenelement unterhalb der Dreheinrichtung angeordnet ist und das zweite Schienenelement oberhalb der Dreheinrichtung angeordnet ist. Erfindungsgemäß ist das erste Schienenelement in Fahrzeugquerrichtung angeordnet. Es wird durch eine Kombination von einem ersten und einem zweiten Schienenelement, deren Ausrichtung zueinander mittels einer Drehung um eine vorzugsweise vertikal orientierte Drehachse verändert werden kann, eine Drehung des Fahrzeugsitzes selbst bei begrenzt zur Verfügung stehenden Raumangebot innerhalb einer Nutzfahrzeugkabine unter Aufrechterhaltung einer festen Verbindung des Fahrzeugsitzes zu dem Fahrzeugboden bzw. Kabinenboden ermöglicht, indem die Verschiebemechanismen, welche durch die Schienenelemente zur Verfügung stehen, zusammen mit der Drehbewegung des Fahrzeugsitzes eingesetzt werden. Es kann somit im Verlauf einer Drehung ein Verschieben des Fahrzeugsitzes im Bezug auf den Fahrzeugsitz in Vorwärts - und Rückwärtsrichtung beispielsweise derart erfolgen, dass bei einer bereits stattgefundenen 45°-Drehung des Fahrzeugsitzes aus seiner Fahrtrichtungsposition heraus ein Verschieben des Fahrzeugsitzes nach vorne mittels dem zweiten Schienenelement, also in eine Richtung, die 45° zu der Fahrtrichtung aufweist, erfolgt. Hierdurch wird das Drehen eines Fahrzeugsitzes selbst bei begrenztem Innenraumangebot innerhalb einer Nutzfahrzeugkabine für eine derartige Durchführung einer Fahrzeugsitzdrehung ermöglicht.

Doch selbst wenn ein ausreichendes Raumangebot für die Drehung des Fahrzeugsitzes innerhalb einer Nutzfahrzeugkabine oder dergleichen zur Verfügung stehen würde, können die ersten und zweiten Schienenelemente dafür genutzt werden, um eine optimierte Position des Fahrzeugsitzes im Bezug auf weitere umliegende Geräte, Tische, sonstige Moduleinrichtungen zu erhalten. Beispielsweise kann bei Anordnung eines Tisches zwischen dem Fahrer- und dem Beifahrersitz ein Fahrzeugsitz um 90° geschwenkt werden und anschließend mittels dem zweiten Schienenelement ein optimaler Abstand des Fahrers zu dem Tisch beziehungsweise des Fahrzeugsitzes im Bezug auf den Tisch eingestellt werden. Zudem kann in dieser Position der Fahrzeugsitz mittels des ersten Schienenelementes nach links und rechts in Bezug auf den Tisch verschoben werden, um eine mittige Anordnung des Fahrzeugsitzes bezüglich des Tisches zu erhalten. Eine derartige Links- und Rechtsverschiebung entspricht somit einer Verschiebung des Fahrzeugsitzes in Fahrzeuglängsrichtung, also unter Bezugnahme auf das restliche Fahrzeug nach vorne und nach hinten.

Vorzugsweise sind zwei oder mehrere parallel zueinander erste Schienenelemente und zwei oder mehrere parallel zueinander zweite Schienenelemente angeordnet, um hierdurch die notwendige Stabilität und ausreichende Befestigungssicherheit gegenüber dem Fahrzeugboden und dem Fahrzeugsitz zu erhalten.

Eine Ausnutzung der Verschiebemechanismen der einzelnen Schienenelemente in Kombination mit der möglichen Drehstellung des Fahrzeugsitzes gestattet einen hohen Sitzkomfort und einen hohen Bedienungskomfort in Bezug auf zu bedienenden Geräte oder andere zu nutzende Einrichtungen innerhalb der Nutzfahrzeugkabine, die abseits des Armaturenbrettes liegen.

In einer Ausgangsposition weist ein derartiger erfindungsgemäßer Fahrzeugsitz das unter dem Sitzteil des Fahrzeugsitzes angeordnete Schienensystem, welches in einem Sitzgestell integriert oder damit verbunden ist, auf, wobei sowohl in Fahrzeuglängsrichtung ausgerichtete Schienenelemente als auch in Fahrzeugquerrichtung ausgerichtete Schienenelemente vorhanden sind.

Durch das Übereinanderanordnen von in Fahrzeuglängsrichtung ausgerichteten Schienenelementen einerseits und in Fahrzeugquerrichtung ausgerichteten zweiten Schienenelementen andererseits wird auf einfache Weise erreicht, dass der Fahrzeugsitz nicht nur in Fahrzeuglängsrichtung, sondern auch in Fahrzeugquerrichtung, sogar dann, wenn dieser nicht in Fahrzeugslängsrichtung ausgerichtet ist, verschoben werden kann. Auf diese Art und Weise kann - gekoppelt mit dem Schwenkmechanismus, der zwischen den übereinander angeordneten Schienen angeordnet ist - nahezu jede beliebige Fahrzeugsitzstellung gegenüber seiner bodenseitigen Position erreicht werden, so lange die Längsausdehnung der hierfür verwendeten Schienenelemente eine derartige Verschiebebewegung zulässt. Demzufolge kann auch eine Verschiebung des Fahrzeugsitzes bei einer entsprechenden Drehstellung des Fahrzeugsitzes gegenüber seiner ursprünglichen Ausrichtung in Fahrzeuglängsrichtung in jede beliebige Horizontalrichtung erfolgen.

Selbstverständlich kann die Schwenkeinrichtung derart ausgebildet sein, dass bei einer Verschwenkbewegung des Fahrzeugsitzes keine horizontale Ausrichtung der zweiten Schienenelemente mehr, sondern eine angewinkelte Ausrichtungsstellung zu den ersten Schienenelementen vorhanden ist. Dies kann beispielsweise dadurch erfolgen, dass die vertikale Drehachse, um welche die Dreheinrichtung eine Drehbewegung des Fahrzeugsitzes durchführt, nicht vertikal ausgerichtet, sondern in einem Winkel zu der Vertikalen angeordnet ist, um hierdurch vorteilhaft eine geneigte Sitzposition des Benutzers zu erhalten. Dies würde bedeuten, dass die erste und die zweite Ebene, innerhalb welcher die ersten und zweiten Schienenelemente angeordnet sind, nicht parallel zueinander, sondern mit einem Winkel zueinander angeordnet sind.

Zusätzlich kann gemäß einer bevorzugten Ausführungsform der Fahrzeugsitz nach hinten oder nach vorne derart verschwenkt werden, dass nicht nur die Rückenlehne sondern auch das Sitzteil eine Schwenkbewegung durchführt, um hierdurch eine hohe Position des Fahrers oder Beifahrers zu ermöglichen. Dies ist insbesondere dann wichtig, wenn der Fahrzeugsitz dafür verwendet werden soll, eine hinter dem Beifahrersitz rückwärtig angebrachte Kochstelle, die eine Kochplatte beinhaltet, vom Beifahrersitz aus zu bedienen und anschließend in einer zurückgeschwenkten Ruheposition das Essen in dem Fahrzeugsitz einzunehmen.

Ein derartiger Fahrzeugsitz kann erfindungsgemäß zusätzlich dafür verwendet werden, durch eine 90°-Schwenkbewegung zur Fahrzeugmitte hin verschwenkt zu werden, um zu einem zwischen den Fahrzeugsitzen des Fahrers und des Beifahrers angeordneten Tisch hingewandt zu sein. Dies ermöglicht nicht nur das Einnehmen von Mahlzeiten, die auf dem Tisch stehen, sondern auch das Durchführen von Kartenspielen oder das Benutzen des Tisches als Schreibunterlage.

Für eine derartige Stellung des Fahrzeugsitzes ist jedoch ein Optimieren des Abstandes des Fahrzeugsitzes gegenüber dem Tisch in Abhängigkeit von der Größe der Person und des zur Verfügung stehenden Innenraumplatz notwendig. In diesem Fall ermöglichen die in der Fahrzeugquerrichtung sich erstreckenden angeordneten Schienenelemente bzw. Führungsschienen des Fahrzeugsitzes ein derartiges Einstellen des Abstandes.

Zusätzlich ermöglichen die in Fahrzeugquerrichtung sich erstreckenden Führungsschienen bzw. Schienenelemente ein seitliches Verschieben des Fahrzeugsitzes, während der Fahrzeugsitz in Fahrzeuglängsrichtung ausgerichtet ist. Auf diese Weise können die Abstände zwischen den Fahrzeugsitzen variiert werden, um beispielsweise einen dritten Sitz zwischen den Fahrzeugen zusätzlich anordnen zu können.

Die Schienenelemente weisen gemäß einer bevorzugten Ausführungsform jeweils ein erstes Profilelement und ein das erste Profilelement umgreifendes und in dessen Längsrichtung verschiebbares zweites Profilelement auf. Das erste Profilelement des ersten Schienenelementes ist hierbei unterseitig mit dem Fahrzeugboden und das zweite Profilelement des ersten Schienenelementes oberseitig mit der Dreheinrichtung verbunden.

Das erste Profilelement des zweiten Schienenelementes ist vorzugsweise unterseitig mit der Dreheinrichtung und das zweite Profilelement des zweiten Schienenelementes oberseitig mit dem Fahrzeugsitz verbunden.

Gemäß einer bevorzugten Ausführungsform weist die Dreheinrichtung ein drehtellerartiges Element mit mindestens einem ersten Drehteil, welches an dem ersten Schienenelement befestigt ist, und mindestens ein gegenüber dem ersten Drehteil drehbar gelagertes zweites Drehteil, welches an den zweiten Schienenelementen mittels eines Rahmens befestigt ist, auf. Bei den Drehteilen kann es sich vorteilhaft um einen Drehteller, der mit den unteren Schienenelementen verbunden ist, und um einen den Drehteller umgebenden Kranz, der ringförmig ausgebildet ist, und welcher mit dem Rahmen und damit mit den oberen Schienenelementen verbunden ist, handeln.

Gemäß einer bevorzugten Ausführungsform sind mit mindestens einem der ersten Schienenelemente nach oben sich erstreckende Zapfenelemente verbunden. Der Rahmen weist komplementär zu den Zapfenelementen ausgebildete Ausnehmungen zum Arretieren des Rahmens gegenüber den ersten Schienenelementen in einer Drehstellung, bei der die ersten und zweiten Schienenelemente 90° zueinander ausgerichtet sind, auf. Dies ermöglicht eine zusätzliche Sicherung der zueinander verdrehbaren ersten und zweiten Schienenelemente, um so sicherzustellen, dass der gesamte Fahrzeugsitz über das gesamte Schienensystem mit dem Fahrzeugboden sicher verbunden ist.

Die Zapfenelemente sind oberhalb eines dritten Schienenelementes auf im rechten Winkel zu dem dritten Schienenelement angeordnete Querstrebenelemente angeordnet. Diese bevorzugte Ausführungsform ermöglicht das indirekte Verbinden der Zapfenelemente mit sämtlichen unteren Schienenelementen, um so eine dauerhafte Fixierung der Zapfenelemente gegenüber sämtlichen Schienenelementen zu erhalten. Alternativ wäre eine Anordnung der Zapfenelemente direkt auf einer der Schienenelemente, die in der ersten Ebene, also zuunterst liegen, denkbar.

Jede Ausnehmung ist jeweils in einem Eckbereich des Rahmens in einem am Rahmen, der viereckförmig ausgebildet ist, endseitig angeordneten Vorsprung unterseitig angeordnet. Eine derartige Ausnehmung ist somit vorteilhaft mittels einer Schweißverbindung an dem Rahmen außenseitig zusätzlich anbringbar und kann durch einfaches Verdrehen der oberen Schienen gegenüber den unteren Schienen in die Zapfen arretierend eingreifen bzw. hineingeschwenkt werden.

Der Verlauf von Ausnehmungsrändern der Ausnehmungen stellt Anteile von Dreiecksschenkeln eines gemeinsamen imaginären Dreiecks dar. Durch die Anordnung der Ausnehmungsränder der einen Ausnehmung einerseits und der weiteren Ausnehmung andererseits derart, dass die Ausnehmungsränder dreieckförmig von den beiden Ausnehmungen aufeinander zulaufen, kann auf einfache Weise ein Hineinschwenken des oberen Rahmens in die in einer Linie angeordneten Zapfen erhalten werden. Alternativ können die Ausnehmungsränder auf einer gemeinsamen Bogenlinie liegen, um durch das Hineinschwenken des Rahmens in die Zapfen ein gleichzeitiges Arretieren der beiden Zapfen in beiden Ausnehmungsrändern oder auch mehrere Zapfen in mehreren Ausnehmungsrändern, sofern sie auf der Bogenlinie liegen, zu erhalten.

Die Zapfenelemente weisen vorzugsweise oberseitig Vorsprünge auf, die es ermöglichen, dass sie von den Ausnehmungsrändern hintergriffen werden können, so dass eine zuverlässige Arretierung der Zapfen innerhalb der Ausnehmungen stattfindet. Dies ermöglicht, dass ein Fahrzeugsitz selbst bei einem starken Bremsvorgang oder einem stattfindenden Unfall nicht dadurch sich von dem Fahrzeugboden lösen kann, dass die Dreheinrichtung, welche die oberen und unteren Schienenelemente zusammenhält, bricht oder in ähnlicher Weise auseinanderfällt, da zusätzlich eine Sicherung durch derartig ausgebildete Zapfenelemente stattfindet.

Weitere vorteilhafte Ausführungsformen ergeben sich aus den Unteransprüchen.

Vorteile und Zweckmäßigkeiten sind der nachfolgenden Beschreibung in Verbindung mit der Zeichnung zu entnehmen. Hierbei zeigen:
- Fig. 1: in einer perspektivischen Darstellung eine Nutzfahrzeugkabine ausschnittsweise mit einem Beifahrersitz gemäß einer Ausführungsform der Erfindung in einer ersten Drehstellung;
- Fig. 2: in einer perspektivischen Darstellung eine Nutzfahrzeugkabine ausschnittsweise mit dem erfindungsgemäßen Beifahrersitz in einer weiteren Drehstellung;
- Fig. 3: in einer perspektivischen Darstellung den erfindungsgemäßen Fahrzeugsitz mit dem unterseitig angeordneten Schienensystem;
- Fig. 4: den in Fig. 3 dargestellten Fahrzeugsitz mit einer seitlichen Verschiebeposition;
- Fig. 5: in einer perspektivischen Darstellung den erfindungsgemäßen Fahrzeugsitz gemäß einer ersten Ausführungsform der Erfindung in einer Drehstellung;
- Fig. 6: den erfindungsgemäßen Fahrzeugsitz in einer Schwenkstellung;
- Fig. 7: in einer perspektivischen Darstellung das Schienensystem bzw. Grundgestell in einer ersten Verschiebeposition der unteren Schienenelemente gemäß einer zweiten Ausführungsform der Erfindung;
- Fig. 8: in einer perspektivischen Darstellung das Grundgestell in einer zweiten Verschiebeposition der unteren Schienenelemente;
- Fig. 9: in einer perspektivischen Darstellung das Grundgestell in einer Drehstellung;
- Fig. 10: in einer perspektivischen Darstellung das Grundgestell des erfindungsgemäßen Fahrzeugsitzes mit einer Verschiebeposition der zweiten Schienenelemente;
- Fig. 11: in einer perspektivischen Darstellung das Grundgestell mit insgesamt 3 unteren Schienenelementen in einer Verschiebeposition;
- Fig. 12: in einer seitlichen Ausschnittsdarstellung eine Arretierungseinrichtung des erfindungsgemäßen Fahrzeugsitzes im Randbereich des Grundgestells;
- Fig. 13: in einer Vorderansicht die Arretierungseinrichtung gemäß Fig. 12, und
- Fig. 14: in einer Draufsicht die Arretierungseinrichtung gemäß Fig. 12 und 13.

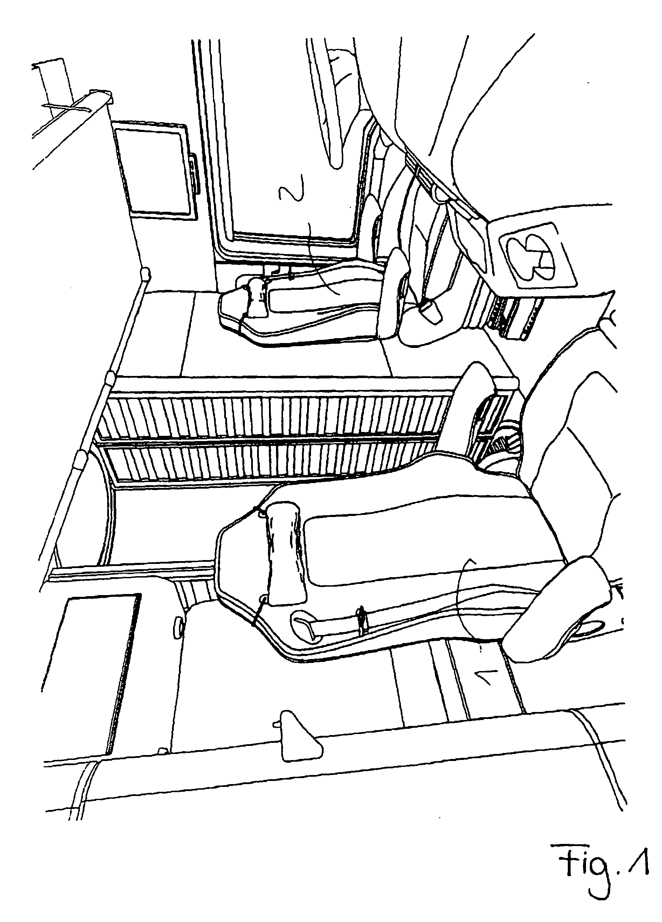

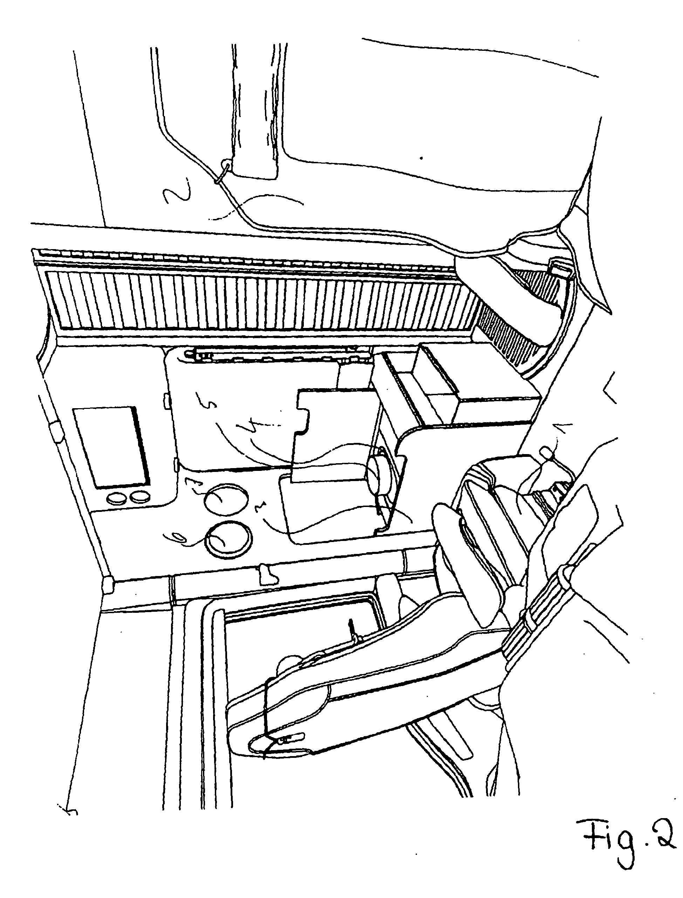

In Fig. 1 und Fig. 2 werden in einer perspektivischen Darstellung eine Nutzfahrzeugkabine ausschnittsweise mit verschiedenen Stellungen des Beifahrersitzes wiedergegeben. Diesen Figuren ist deutlich zu entnehmen, dass der Beifahrersitz 1 gegenüber dem Fahrersitz 2 in der Darstellung gemäß der Fig. 2 um 180° geschwenkt ist. Diese Positionierung des Beifahrersitzes 1 soll das Bedienen eines Kochherdes 3 mit einer Kochplatte 4 und darauf angeordneten Kochtopf 5, die im rückwärtigen Bereich der Nutzfahrzeugkabine angeordnet sind, ermöglichen.

Weitere Töpfe sind beispielsweise in den Ausnehmungen 6 und 7 der Nutzfahrzeugkabinenwand angeordnet.

Um ein optimiertes Bedienen der Kochplatte 4 zu ermöglichen, wird der Fahrersitz zunächst um 180° geschwenkt und anschließend mittels des hier nicht näher dargestellten Schienensystems bzw. Grundgestells zur Vorderseite des Fahrzeuges hin verschoben, so dass ein ausreichender Abstand zum Kochherd - auch aus Sicherheitsgründen - gewährleistet ist.

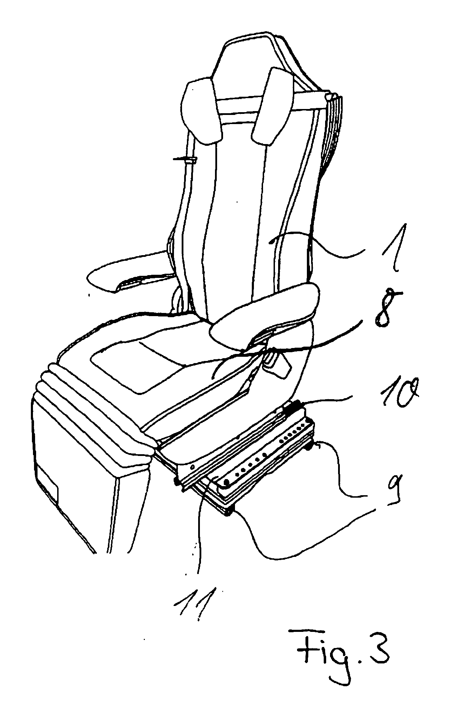

In Fig. 3 wird in einer perspektivischen Darstellung der erfindungsgemäße Fahrzeugsitz mit dem unterseitig angeordneten Schienensystem bzw. Grundgestell wiedergegeben. Dieser Darstellung ist deutlich zu entnehmen, dass der Fahrzeugsitz 1 mit einem Sitzteil 8 unter dem Sitzteil mindestens zwei sich in Fahrzeuglängsrichtung erstreckende erste Schienenelemente 9 und mindestens zwei sich in Fahrzeugquerrichtung erstreckende zweite Schienenelemente 10 aufweist.

Die ersten Führungsschienen 9 und die zweiten Führungsschienen 10 können zueinander verschwenkt werden. Dies geschieht auch mit Hilfe einer zwischen den ersten und zweiten Führungsschienen 9, 10 angeordneten Platte 11 und einem darauf angeordneten nicht näher dargestellten Schwenkmechanismus gemäß einer ersten Ausführungsform der Erfindung.

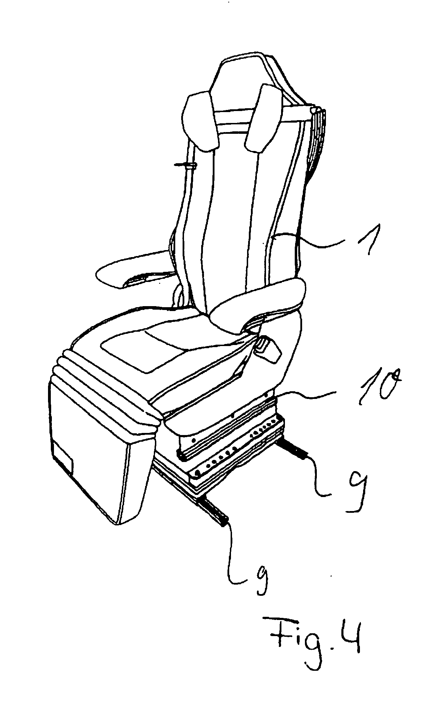

In Fig. 4 wird in einer perspektivischen Darstellung der Fahrzeugsitz gemäß der ersten Ausführungsform der Erfindung in einer ersten Verschiebeposition gezeigt. Diese seitliche Verschiebeposition kann erhalten werden, trotzdem sich der Fahrzeugsitz in sich in Fahrzeuglängsrichtung ausgerichtet befindet. Der Fahrzeugsitz kann somit auf den beiden unteren ersten Schienenelementen 9 zur Seite hin verschoben werden, um beispielsweise hierdurch einen größeren Abstand zwischen den Fahrzeugsitzen zu schaffen.

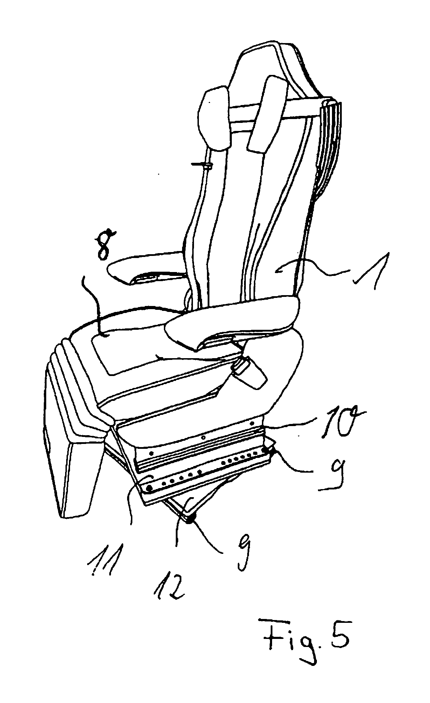

In Fig. 5 wird in einer perspektivischen Darstellung der erfindungsgemäße Fahrzeugsitz 1 gemäß der ersten Ausführungsform der Erfindung in einer Drehposition gezeigt. In dieser geschwenkten Position des Fahrzeugsitzes sind die ersten Führungsschienen 9, welche unterseitig auch gegenüber dem Fahrzeugboden der Nutzfahrzeugkabine arretiert sein müssen, in unverschobener Position. Dies gilt ebenso für die zweiten Führungsschienen 10. Allerdings sind die Platten 11,12 zueinander verschwenkt, so dass hierdurch beispielsweise ein besseres Aufstehen aus dem Fahrzeugsitz ermöglicht wird, wenn der Fahrer/Beifahrer den rückwärtigen Bereich der Nutzfahrzeugkabine betreten möchte.

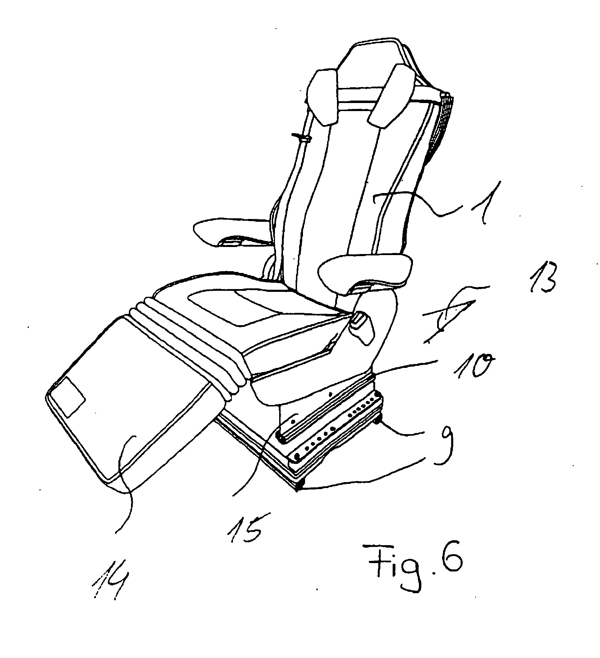

In Fig. 6 ist in einer perspektivischen Darstellung der Fahrzeugsitz gemäß der ersten Ausführungsform der Erfindung in einer nach hinten geschwenkten Position dargestellt. Hierbei weist der Fahrzeugsitz eine nach hinten gerichtete Neigung, wie sie durch den Winkel 13 dargestellt wird, auf. Zugleich ist ein Beinauflageelement 14 beziehungsweise ein Fußteil nach oben geschwenkt. Auf diese Weise kann eine Ruheposition, wie es beispielsweise zum Schlafen des Beifahrers gewünscht wird, eingenommen werden.

Die Schwenkbewegung wird beispielsweise durch ein Ausfahren eines unterseitigen Bleches oder einer unterseitigen Platte 15 erreicht.

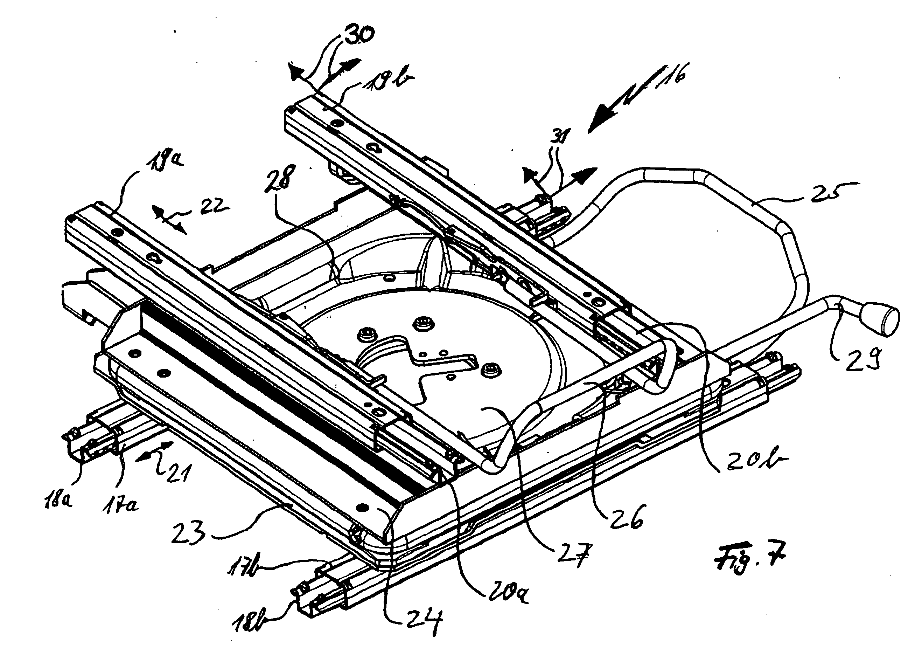

In Fig. 7 ist in einer perspektivischen Darstellung das Grundgestell bzw. das Schienensystem des erfindungsgemäßen Fahrzeugsitzes gemäß einer zweiten Ausführungsform der Erfindung in einer ersten Position dargestellt. Das Grundgestell 16 weist erste untere Schienenelemente, die parallel zueinander verlaufen auf, wobei sich jedes Schienenelement aus einem inneren ersten Profilelemente 18a, 18b und einem das erste Profilelement umgebenden zweiten Profilelement 17a und 17b zusammensetzt. Der Darstellung ist deutlich zu entnehmen, dass die zweiten Profilelemente 17a und 17b gegenüber den im Wesentlichen mit einem U-förmigen Querschnitt ausgestatteten ersten Profilelementen 18a und 18b längsverschieblich sind, wie es durch den Doppelpfeil 21 angedeutet wird.

Ebenso weist das Grundgestell 16 zweite Schienenelemente 19a, 19b und 20a, 20b auf. Wiederum sind unterseitig angeordnete erste Profilelemente 20a und 20b und diese Profilelemente umgebende zweite Profilelemente 19a und 19b vorhanden, wobei die weiteren Profilelemente gegenüber dem ersten Profilelementen längsverschieblich angeordnet sind, wie es durch den Doppelpfeil 22 angedeutet wird.

Die ersten Schienenelemente sind innerhalb einer Ebene 31 und die zweiten Schienenelemente innerhalb einer zweiten Ebene 30 angeordnet.

Zwischen den beiden Ebenen 31 und 30 ist eine Dreheinrichtung 27, 28 ausgebildet, die dazu dient, die zweiten Schienenelemente gegenüber den ersten Schienenelementen drehbeweglich zu lagern, also eine Ausrichtung der zweiten Schienenelemente gegenüber den ersten Schienenelementen hinsichtlich des Winkels, den diese einschließen, zu verändern.

Handgriffe 26 und 25 dienen dazu, die Verschiebebewegung der Schienenelemente zu ermöglichen, indem derartige Handgriffe aus ihrer Arretierung gelöst werden und eine neue Einrastung der Handgriffe nach erfolgter Verschiebebewegung der Schienenelemente erfolgt.

Ein weiterer Griff 29 ist dafür vorgesehen, die Dreheinrichtung 27, 28 in ihrer Drehposition zu arretieren und aus einer derartigen Arretierung bei Handbetätigung zu lösen.

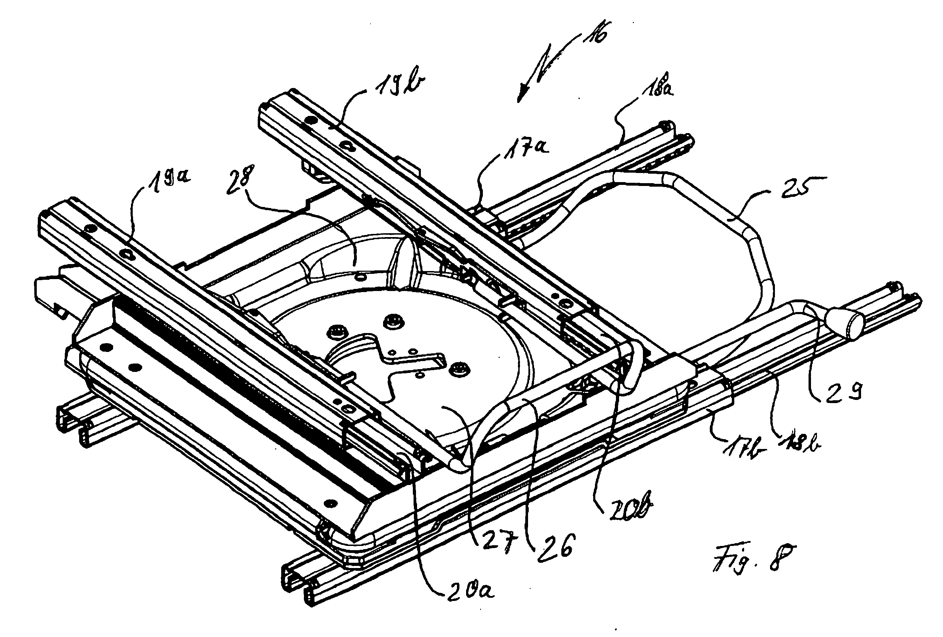

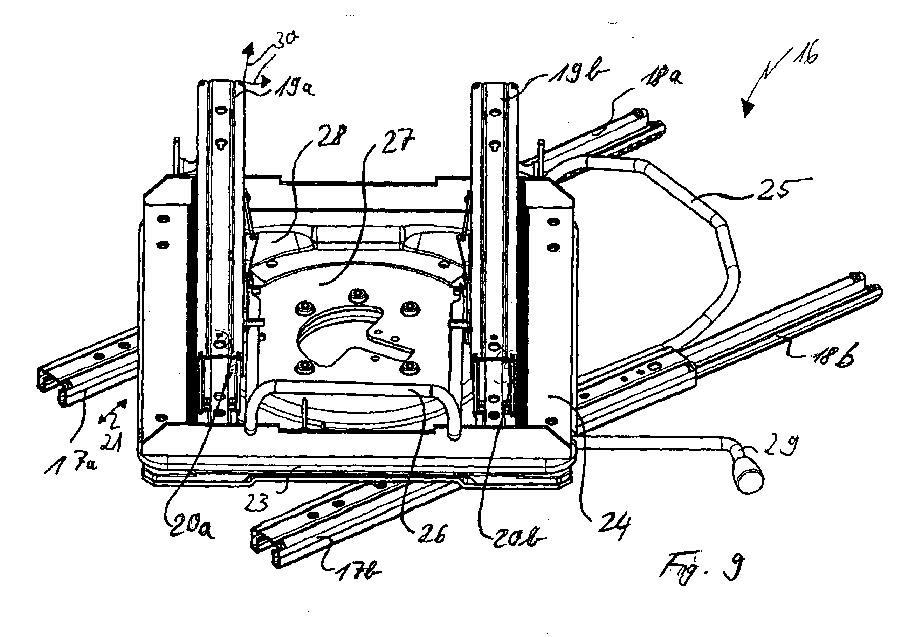

Die Dreheinrichtung 27, 28 ist, wie auch aus den weiteren Darstellungen gemäß den Fig. 8, 9, 10, 11 ersichtlich ist, mit ihrem ersten Drehteil 27, welches drehtellerartig ausgebildet ist, mit einem Rahmen 23, 24 verbunden, auf dem die zweiten Schienenelemente 19a, 19b und 20a, 20b angeordnet sind. Der Drehteller bewegt somit den gesamten Rahmen 23 und 24 sowie die zweiten Schienenelemente 19a, 19b und 20a, 20b, wie es auch aus der Fig. 9 ersichtlich ist.

Der den Drehteller umgebende Drehkranz bzw. Drehkreisring 28 ist demzufolge mit dem entsprechend anderen Teil, also mit den ersten Schienenelementen 17a, 17b und '18a, 18b verbunden.

In Fig. 8 ist in einer perspektivischen Darstellung das Grundgestell in einer ersten Verschiebeposition der ersten Schienenelemente 17a, 17b und mit einer ersten Verschiebeposition der zweiten Schienenelemente 19a und 19b dargestellt. In einer derartigen Darstellung kann der Fahrzeugsitz eine nach hinten gerückte Position unter Bezugnahme auf die Fahrzeuglängsrichtung und eine seitlich verschobene Position aufweisen, um beispielsweise die Anordnung eines weiteren Fahrzeugsitzes zwischen den Fahrzeugsitzen oder die Anordnung eines Tisches zu ermöglichen, auf dem man etwas ablegen möchte.

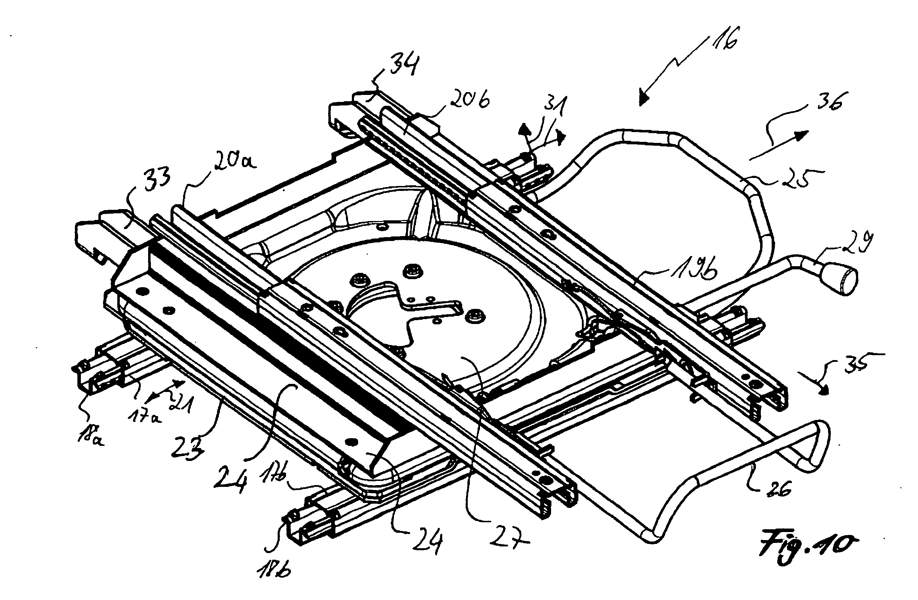

In Fig. 9 ist in einer weiteren perspektivischen Darstellung das Grundgestell für den Fahrzeugsitz gemäß der zweiten Ausführungsform der Erfindung gezeigt. In dieser in Fig. 9 dargestellten Drehposition des Fahrzeugsitzes ist es möglich, ein erleichtertes Aussteigen aus dem LKW oder ein vereinfachtes sich Erheben von dem Fahrzeugsitz zur Nutzfahrzeugkabinenmitte hin sicherzustellen. In Fig. 10 wird in einer weiteren perspektivischen Darstellung das Grundgestell des Fahrzeugsitzes gemäß der zweiten Ausführungsform der Erfindung gezeigt. Wiederum weisen die zweiten Schienenelemente eine Verschiebeposition auf. Beide ersten Schienenelemente lassen sich entlang der Pfeilrichtung 36 und die zweiten Schienenelemente sind entlang der Richtung 35 verschoben.

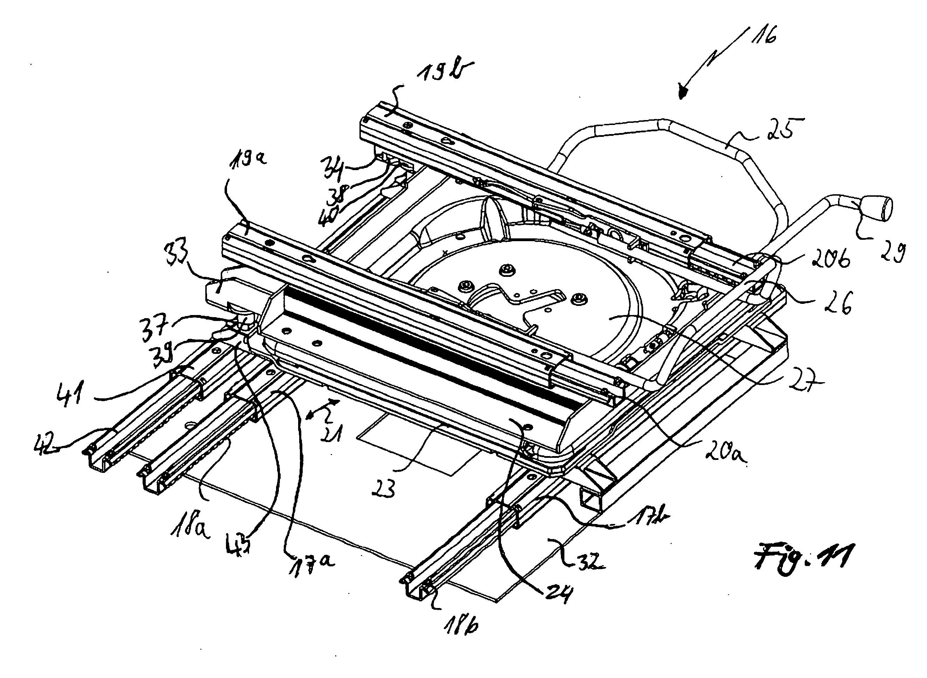

Dieser Darstellung ist deutlich zu entnehmen, dass an dem Rahmen 23, 24 eine Arretierungseinrichtung 33, 34 angeordnet ist, die vorzugsweise mittels einer Schweißverbindung mit dem Rahmen verbunden ist. Diese Arretierungseinrichtung 33, 34 ist als Fortsätze ausgebildet, die unterseitig Ausnehmungen 37, 38, wie aus Fig. 11 ersichtlich, aufweisen, in welche Zapfenelemente 39, 40 eingreifen können.

Bevorzugt werden derartige Zapfen 39, 40 auf Querstreben 43 angeordnet, die sich über sämtliche ersten Schienenelemente 17a, 17b und 41 erstrecken. Gemäß der in Fig. 11 dargestellten Ausführungsform sind insgesamt 3 erste Schienenelemente 17a, 17b, 18a, 18b, 41 und 42 angeordnet, die wiederum aus ersten und zweiten Profilelementen, wie bereits beschrieben, bestehen.

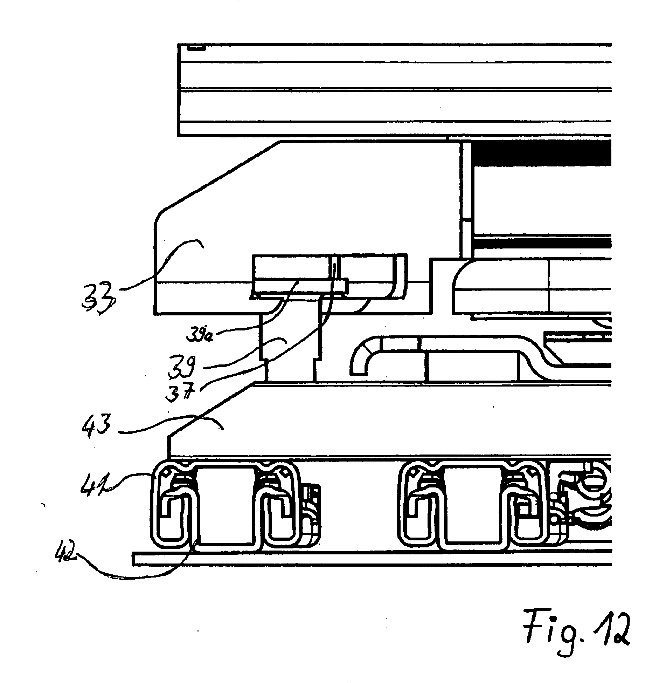

Die Arretierungseinrichtung, bestehend aus den Fortsätzen 33 und 34 sowie den Zapfenelementen 39, 40, die in die Ausnehmungen 37, 38 eingreifen, sind in vergrößerter Darstellung in den Fig. 12, 13 und 14 aus verschiedenen Perspektiven dargestellt. In Fig. 12 wird in einer seitlichen Darstellung vergrößert der Fortsatz bzw. Vorsprung 33 dargestellt, der mit dem Zapfenelement 39 wechselwirkt. Das Zapfenelement 39 weist oberseitig einen Absatz 39a auf, dessen Durchmesser größer als der Durchmesser des unteren Abschnittes des Zapfens 39 ist. Hierdurch ist es möglich, dass die Ausnehmung 37 durch entsprechend komplementäre Ausbildung den oberen Teil 39a des Zapfens 39 untergreift und somit eine zuverlässige Arretierung des oberen Anteils des Grundgestells gegenüber dem unteren Anteil sichergestellt ist.

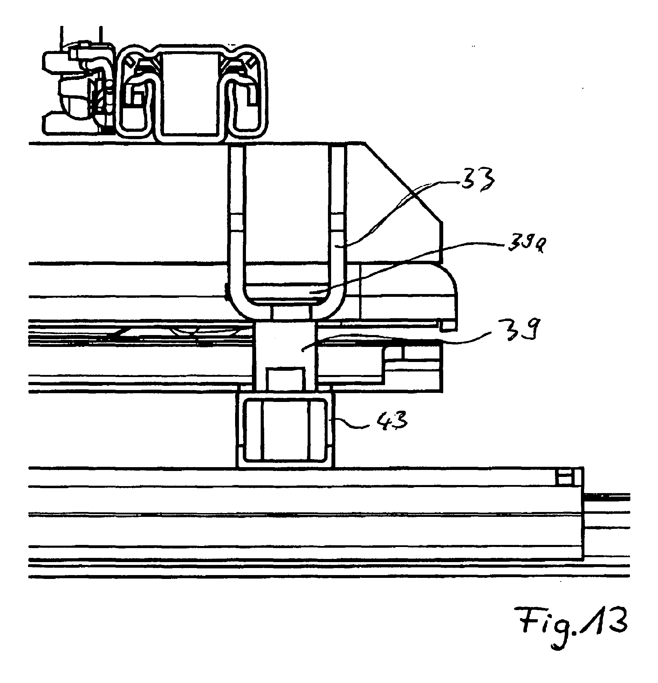

In Fig. 13 wird in einer Draufsicht die in Fig. 12 wiedergegebene Arretierungseinrichtung dargestellt. Dieser Darstellung ist deutlich zu entnehmen, dass das Zapfenelement 39 in die Ausnehmung des Vorsprungs bzw. Fortsatzes 33 eingreift.

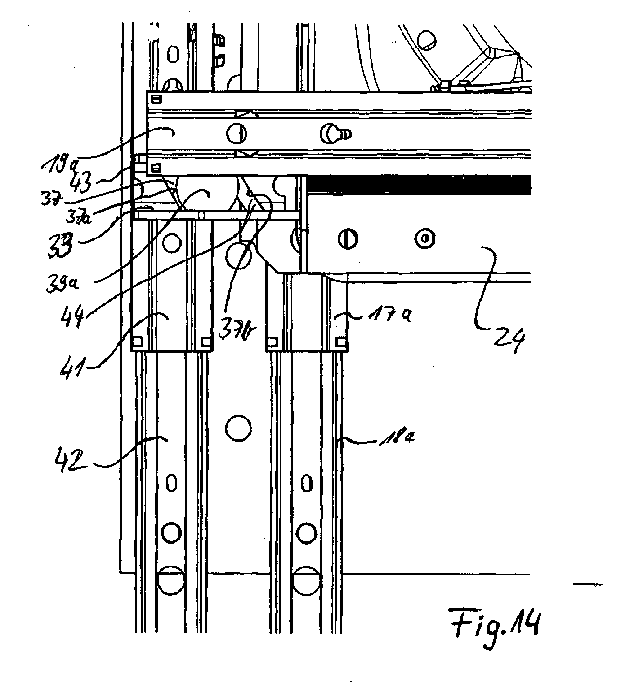

In Fig. 14 wird in einer Draufsicht die Arretierungseinrichtung mit einem Vorsprung und einem Zapfenelement wiedergegeben, wobei die Arretierungseinrichtung eine beliebige Anzahl von Vorsprüngen und Zapfenelementen, vorzugsweise jedoch zwei Vorsprünge von zwei Zapfenelementen aufweisen kann.

Dieser Darstellung ist zu entnehmen, dass die Ausnehmung 37 Ausnehmungsränder 37a und 37b aufweist, welche in einem Winkel 44 zu dem Querstrebenverlauf der Querstrebe 43 ausgerichtet sind. Auf diese Weise wird erreicht, das ein Hineinschwenken der Ausnehmung 37 in den ortsfesten Zapfen 39 ohne weitergehende Behinderung ermöglicht wird, wie es bei einer durchgeführten Drehbewegung des Oberteils des Grundgestells gegenüber dem Unterteil, also der oberen Schienenelemente gegenüber den unteren Schienenelementen, geschieht.

Die Ausnehmung 38, wie sie in Fig. 11 dargestellt ist, ist demzufolge in die andere Richtung mit ihren Ausnahmerändern ausgerichtet, um so den Verlauf der Ausnehmungsränder auf einem gedachten Dreieck zu erhalten, dessen einer Eckpunkt irgendwo zwischen den beiden Ausnehmungen zu finden ist.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Beifahrersitz
- 2: Fahrersitz
- 3: Kochherd
- 4: Kochplatte
- 5: Kochtopf
- 6, 7: Ausnehmungen
- 8: Sitzteil
- 9: erste Schienenelemente
- 10: zweite Schienenelemente
- 11, 12: Platten
- 13: Winkel
- 14: Beinauflage
- 15: Neigungsfläche/-platte
- 16: Grundgestell
- 17a, 17b: zweite Profilelemente der ersten Schienenelemente
- 18a, 18b: erste Profilelemente der ersten Schienenelemente
- 19a, 19b: zweite Profilelemente der zweiten Schienenelemente
- 20a, 20b: erste Profilelemente der zweiten Schienenelemente
- 21, 22: Verschieberichtungen
- 23, 24: Rahmen
- 25, 26, 29: Handbetätigungshebel
- 27: Drehteller
- 28: Drehkranz
- 30: zweite Ebene
- 31: erste Ebene
- 33, 34: Vorsprünge/Fortsätze
- 35, 36: Verschieberichtungen
- 37,38: Ausnehmungen
- 39, 40: Zapfenelemente
- 41, 42: weiteres Schienenelement
- 43: Querstrebe

## Patentansprüche

1. Fahrzeugzeugsitz mit einem Sitzteil (8) und einem mit dem Sitzteil (8) verbundenen Grundgestell (16), wobei das Grundgestell (16) mindestens ein erstes Schienenelement (17a, 17b, 18a, 18b) zum Verschieben des Sitzteils (8) aufweist, wobei
das erste Schienenelement (17a, 17b, 18a, 18b) in einer ersten Ebene (31) und mindestens ein zweites Schienenelement (19a, 19b, 20a, 20b) zum Verschieben des Sitzteils (8) in einer zweiten Ebene (30) mittels einer Dreheinrichtung (27, 28) derart miteinander verbunden sind, dass ihre gegenseitige Ausrichtung veränderbar ist, wobei das erste Schienenelement (17a, 17b, 18a, 18b) unterhalb der Dreheinrichtung (27, 28) angeordnet ist und das zweite Schienenelement (19a, 19b, 20a, 20b) oberhalb der Dreheinrichtung (27, 28) angeordnet ist,
**dadurch gekennzeichnet, dass**
das erste Schienenelement (17 a, 17b, 18 a, 18b) in Fahrzeugquerrichtung angeordnet ist.

2. Fahrzeugsitz nach Anspruch 1,
**dadurch gekennzeichnet, dass**
zwei oder mehrere zueinander parallel angeordnete erste Schienenelemente (17a, 17b, 18a, 18b) und zwei oder mehrere parallel zueinander angeordnete zweite Schienenelemente (19a, 19b, 20a, 20b) angeordnet sind.

3. Fahrzeugsitz nach Anspruch 1 oder 2,
**dadurch gekennzeichnet, dass**
die Schienenelemente jeweils ein erstes Profilelement (18a, 18b; 20a, 20b) und ein das erste Profilelement (18a, 18b; 20a, 20b) umgreifendes und in dessen Längsrichtung verschiebbares zweites Profilelement (17a, 17b; 19a, 19b) aufweisen.

4. Fahrzeugsitz nach Anspruch 3,
**dadurch gekennzeichnet, dass**
das erste Profilelement (18a, 18b) des ersten Schienenelementes unterseitig mit einem Fahrzeugboden (32) und das zweite Profilelement (17a, 17b) des ersten Schienenelementes oberseitig mit der Dreheinrichtung (27) verbunden sind.

5. Fahrzeugsitz nach Anspruch 3 oder 4,
**dadurch gekennzeichnet, dass**
das erste Profilelement (20a, 20b) des zweiten Schienenelementes (19a, 19b) unterseitig mit der Dreheinrichtung (28) und das zweite Profilelement (19a, 19b) des zweiten Schienenelementes oberseitig mit dem Fahrzeugsitz (1) verbunden ist.

6. Fahrzeugsitz nach einem der vorangegangenen Ansprüche,
**dadurch gekennzeichnet, dass**
die Dreheinrichtung ein drehtellerartiges Element mit mindestens einem ersten Drehteil (27), welches an den ersten Schienenelementen (17a, 17b) befestigt ist, und mindestens einem gegenüber dem ersten Drehteil (27) drehbar gelagerten zweiten Drehteil (28), welches an den zweiten Schienenelementen (20a, 20b) mittels eines Rahmens (24) befestigt ist, aufweist.

7. Fahrzeugsitz nach Anspruch 6,
**dadurch gekennzeichnet, dass**
mit mindestens einem der ersten Schlenenelemente (41, 42) mindestens ein nach oben sich erstreckendes Zapfenelement (39, 40) verbunden ist und der Rahmen (24) komplementär zu dem Zapfenelement (39, 40) ausgebildete Ausnehmungen (37, 38) zum Arretieren des Rahmens (24) gegenüber den ersten Schienenelementen (41, 42) in einer Drehstellung, bei der die ersten und die zweiten Schienenelemente (17a, 17b, 18a, 18b, 19a, 19b, 20a, 20b, 41, 42) 90° zueinander ausgerichtet sind, aufweist.

8. Fahrzeugsitz nach Anspruch 7,
**dadurch gekennzeichnet, dass**
zwei der Zapfenelemente (39, 40) oberhalb eines dritten Schienenelementes (41, 42) auf im rechten Winkel zu dem dritten Schienenelement (41, 42) angeordneten Querstrebenelementen (43) angeordnet sind.

9. Fahrzeugsitz nach Anspruch 7 oder 8,
**dadurch gekennzeichnet, dass**
jede Ausnehmung (37, 38) jeweils in einem Eckbereich des Rahmens (24) in einem am Rahmen (24), der viereckförmig ausgebildet ist, endseitig angeordneten Vorsprung (33, 34) unterseitig angeordnet ist.

10. Fahrzeugsitz nach einem der Ansprüche 7 - 9,
**dadurch gekennzeichnet, dass**
der Verlauf von Ausnehmungsrändem (37a, 37b) der Ausnehmungen (37, 38) Anteile von Drelecksschenkeln eines gemeinsamen imaginären Dreiecks oder auf einer gemeinsamen Bogenlinie beschreiben.

11. Fahrzeugsitz nach Anspruch 10,
**dadurch gekennzeichnet, dass**
die Zapfenelemente (39, 39a, 40) von den Ausnehmungsrändern (37a, 37b) unter- oder hintergriffen sind.

## Claims

1. Vehicle seat with a seat part (8) and a base frame (16) which is connected to the seat part (8), wherein the base frame (16) has at least a first rail element (17a, 17b, 18a, 18b) for displacing the seat part (8), wherein
the first rail element (17a, 17b, 18a, 18b) in a first level (31) and at least a second rail element (19a, 19b, 20a, 20b) for displacing the seat part (8) in a second level (30) are connected with each other by means of a rotary device (27, 28) in such a way that their orientation towards each other is modifiable, wherein the first rail element (17a, 17b, 18a, 18b) is arranged below the rotary device (27, 28) and the second rail element (19a, 19b, 20a, 20b) is arranged above the rotary device (27, 28),
**characterised by** the fact that
the first rail element (17a, 17b, 18a, 18b) is arranged in transverse direction of the vehicle.

2. Vehicle seat according to claim 1,
**characterised by** the fact that
two or more first rail elements (17a, 17b, 18a, 18b) arranged parallel to each other and two or more second rail elements (19a, 19b, 20a, 20b) arranged parallel to each other are arranged.

3. Vehicle seat according to claims 1 or 2,
**characterised by** the fact that
the rail elements respectively have a first profile element (18a, 18b, 20a, 20b) and a second profile element (17a, 17b, 19a, 19b) which encompasses the first profile element (18a, 18b, 20a, 20b) and which is displaceable in its longitudinal direction.

4. Vehicle seat according to claim 3,
**characterised by** the fact that
the first profile element (18a, 18b) of the first rail element is connected on the lower side to a vehicle bottom (32) and the second profile element (17a, 17b) of the first rail element is connected to the rotary device (27) on the upper side.

5. Vehicle seat according to claims 3 or 4,
**characterised by** the fact that
the first profile element (20a, 20b) of the second rail element (19a, 19b) is connected on the lower side to the rotary device (28) and the second profile element (19a, 19b) of the second rail element is connected on the upper side to the vehicle seat (1).

6. Vehicle seat in accordance according one of the preceding claims,
**characterised by** the fact that
the rotary device has a rotary table like element with at least a first rotary part (27) attached to the first rail elements (17a, 17b) and at least a second rotary part (28) which is rotative mounted as regards to the first rotary past (27) and which is attached to the second rail elements (20a, 20b) by means of a frame (24).

7. Vehicle seat according to claim 6,
**characterised by** the fact that
at least one tappet element (39, 40) extending upwardly is connected to at least one of the first rail elements (41, 42) and the frame (24) has recesses (37, 38) formed complementarily to the tappet element (39, 40) to lock the frame (24) the first rail elements (41, 42) in a rotary position in which the first and the second rail elements (17a, 17b, 18a, 18b, 19a, 19b, 20a, 20b, 41, 42) are arranged to each other at an angle of 90°.

8. Vehicle seat according to claim 7,
**characterised by** the fact that
two of the tappet elements (39, 40) are arranged above a third rail element (41, 42) on crossbar elements (43) arranged at right angles to the third rail element (41, 42).

9. Vehicle seat according to claims 7 or 8,
**characterised by** the fact that
each recess (37, 38) is respectively arranged respectively in a corner area of the frame (24) at the lower side of a protrusion (33, 34) arranged at the end side of the frame (24) formed in a rectangular shape.

10. Vehicle seat according to one of the claims 7 to 9,
**characterised by** the fact that
the course of the recess boundaries (37a, 37b) of the recesses (37, 38) describe portions of triangular legs of a common imaginary triangle or along a common arc line.

11. Vehicle seat according to claim 10,
**characterised by** the fact that
the journal elements (39, 39a, 49) are gripped from below or from behind by the recess borders (37a, 37b).

## Revendications

1. Siège de véhicule, comportant une partie de siège (8) et un bâti de base (16), assemblé à la partie formant siège (8), ledit bâti de base (16) comportant au moins un premier élément de rail (17a, 17b, 18a, 18b) pour le coulissement de la partie de siège (8),
le premier élément de rail (17a, 17b, 18a, 18b) dans un premier plan (31) et au moins un deuxième élément de rail (19a, 19b, 20a, 20b), pour le coulissement de la partie de siège (8) dans un deuxième plan (30), étant reliés entre eux au moyen d'un dispositif de rotation (27, 28), de telle sorte que leur orientation opposée puisse être modifiée, le premier élément de rail (17a, 17b, 18a, 18b) étant disposé en dessous du dispositif de rotation (27, 28) et le deuxième élément de rail (19a, 19b, 20a, 20b) étant disposé au-dessus du dispositif de rotation (27, 28),
**caractérisé en ce que** le premier élément de rail (17a, 17b, 18a, 18b) est disposé dans le sers transversal du véhicule.

2. Siège de véhicule selon la revendication 1, **caractérisé en ce que** deux ou plusieurs premiers éléments de rail (17a, 17b, 18a, 18b), disposés parallèlement entre eux, et deux ou plusieurs deuxièmes éléments de rail (19a, 19b, 20a, 20b), disposés parallèlement entre eux sont disposés.

3. Siège de véhicule selon la revendication 1 ou 2, **caractérisé en ce que** les éléments de rail comportent respectivement un premier élément profilé (18a, 18b ; 20a, 20b) et un deuxième élément profilé (17a, 17b ; 19a, 19b), enserrant le premier élément profilé (18a, 18b ; 20a, 20b) et apte à coulisser dans le sens longitudinal de celui-ci.

4. Siège de véhicule selon la revendication 3, **caractérisé en ce que** le premier élément profilé (18a, 18b) du premier élément de rail est relié sur la face inférieure avec un plancher (32) de véhicule et le deuxième élément profilé (17a, 17b) du premier élément de rail est relié sur la face supérieure avec le dispositif de rotation (27).

5. Siège de véhicule selon la revendication 3 ou 4, **caractérisé en ce que** le premier élément profilé (20a, 20b) du deuxième élément de rail (19a, 19b) est relié sur la face inférieure avec le dispositif de rotation (28) et le deuxième élément profilé (19a, 19b) du deuxième élément de rail est relié sur la face supérieure avec le siège (1) du véhicule.

6. Siège de véhicule selon l'une quelconque des revendications précédentes, **caractérisé en ce que** le dispositif de rotation comporte un élément en forme de plateau tournant avec au moins une première partie tournante (27), qui est fixée sur les premiers éléments de rail (17a, 17b), et au moins une deuxième partie tournante (28), qui est montée rotative par rapport au première partie tournante (27) et qui est fixée sur les deuxièmes éléments de rail (20a, 20b) au moyen d'un cadre (24).

7. Siège de véhicule selon la revendication 6, **caractérisé en ce qu'**au moins un élément à tourillon (39, 40), qui s'étend vers le haut, est relié à au moins l'un des premiers éléments de rail (41, 42), et le cadre (24) comporte des évidements (37, 38), qui sont réalisés de manière complémentaire à l'élément à tourillon (39, 40), afin de bloquer le cadre (24) par rapport aux premiers éléments de rail (41, 42) dans une position de rotation, dans laquelle les premiers et les deux éléments de rail (17a, 17b, 18a, 18b, 19a, 19b, 20a, 20b, 41,42) sont orientés entre eux selon un angle de 90°.

8. Siége du véhicule selon la revendication 7, **caractérisé en ce que** deux des éléments à tourillon (39, 40) sont disposés au-dessus d'un troisième élément de rail (41, 42) sur des entretoises (43) qui forment un angle droit par rapport au troisième élément de rail (41, 42).

9. Siège de véhicule selon la revendication 7 ou 8, **caractérisé en ce que** chaque évidement (37, 38) est disposé sur la face inférieure respectivement dans une zone d'angle du cadre (24) dans une saillie (33, 34) disposée à l'extrémité du cadre (24) rectangulaire.

10. Siège de véhicule selon l'une quelconque des revendications 7 à 9, **caractérisé en ce que** le tracé des bords (37a, 37b) des évidements (37, 38) décrit les parties des côtés d'un triangle imaginaire commun ou une ligne en arc commune.

11. Siège de véhicule selon la revendication 10, **caractérisé en ce que** les éléments à tourillon (39, 39a, 40) sont saisi par le bas ou l'arrière par les bords (37a, 37b) des évidements.
